# EUROPEAN PATENT APPLICATION

(11) **EP 4 645 575 A1**
(43) Date of publication of application: **05.11.2025**
(21) Application number: 24869419.2
(22) Date of filing: 11.09.2024
(51) Int. Cl.: H01M 50/507, H01M 50/289, H01M 50/204, H01M 50/503, H01M 50/244

(54) **CELLS CONTACT SYSTEM AND CELLS CONTACT SYSTEM SUPPORT, AND BATTERY MODULE**

(30) Priority: 06.11.2023 CN 202323000242 U
(71) Applicant: Eve Energy Co., Ltd., Huizhou, Guangdong 516006 (CN)
(72) Inventor: LI, Dongjun, Huizhou, Guangdong 516006 (CN)
(74) Representative: Berggren Oy
(86) International application number: PCT/CN2024/118205
(87) International publication number: WO 2025/098005

(57) **Abstract**

The application provides an integrated busbar, and a bracket of the integrated busbar, and a battery module of the integrated busbar. The integrated busbar includes a bus assembly and an integrated busbar bracket. The bus assembly is configured to be electrically connected to a plurality of battery cells. The integrated busbar bracket includes a mounting bracket and an installation bracket configured as split structures. Two ends of the bus assembly are installed on the mounting bracket. A middle part of the bus assembly is installed on the installation bracket.

## Description

The present application claims the priority to Chinese Patent Application No. 202323000242.4, filed with the China National Intellectual Property Administration (CNIPA) on November 6, 2023. The entire disclosures of the above applications are incorporated herein by reference.

### TECHNICAL FIELD

The present application relates to a field of battery technologies, especially to an integrated busbar, a bracket thereof, and a battery module thereof.

### BACKGROUND

CCS (Cells Contact System, integrated busbar) is primarily assembled from a signal collection assembly (FPC, PCB, FFC, etc.), plastic structural elements, and copper-aluminum conductors. Typically, an integrated tray serves as an installation carrier for the CCS of large cylindrical batteries. Consequently, for different CCS structures, different molds are required to form matching trays, and UV glue is also needed for coverage and protection.

### SUMMARY

The CCS assembly process in the related technology is cumbersome, has a relatively long processing cycle, and incurs higher processing costs.

In a first aspect, the present application provides an integrated busbar. The integrated busbar comprises:
a bus assembly configured to be electrically connected to a plurality of battery cells; and
an integrated busbar bracket comprising a mounting bracket and an installation bracket configured as split structures;
wherein two ends of the bus assembly are installed on the mounting bracket, and a middle part of the bus assembly is installed on the installation bracket.

In a second aspect, the present application also provides an integrated busbar bracket. The integrated busbar bracket is adapted for an integrated busbar, and the integrated busbar comprises a bus assembly configured to be electrically connected to a plurality of battery cells, and the integrated busbar bracket comprises a mounting bracket and an installation bracket configured as split structures;
wherein the mounting bracket is configured for two ends of the bus assembly to be installed on the mounting bracket, and the installation bracket is configured for a middle part of the bus assembly to be installed on the installation bracket.

In a third aspect, the present application also provides a battery module. The battery module comprises an integrated busbar and a plurality of battery sets. The integrated busbar is disposed on the plurality of the battery sets.

### Beneficial effects

The integrated busbar provided by the present application configures the integrated busbar bracket into the mounting bracket and the installation bracket configured as split structures to regionally install and fasten different parts of the bus assembly. The split structure design can provide a flexible adjustment space for installation of the bus assembly, thereby reducing the limit of an integral design in the related art. At the same time, regarding the upgrade and modification of certain parts of the structure of the bus assembly, and this can be achieved by replacing the corresponding mounting bracket or installation bracket to adapt to different bus assemblies. For damage to different parts of the integrated busbar bracket, the mounting bracket or installation bracket can also be replaced, thereby reducing replacement costs to further mitigate the technical issues in the related technology where the one-piece tray of the integrated busbar is inconvenient to disassemble and has relatively high replacement costs.

### BRIEF DESCRIPTION OF THE DRAWINGS

FIG. 1 is a schematic installation view of an integrated busbar and battery cells provided by some embodiments of the present application.
FIG. 2 is a schematic exploded view of the integrated busbar and the battery cells provided by some embodiments of the present application.
FIG. 3 is a schematic exploded view of the integrated busbar provided by some embodiments of the present application.
FIG. 4 is an enlarged view of a A region in FIG. 3.
FIG. 5 is a schematic structural view of a bus assembly provided by some embodiments of the present application.
FIG. 6 is a schematic structural view of a mounting bracket provided by some embodiments of the present application.
FIG. 7 is a schematic structural view of a first bracket, series busbars and output busbars provided by some embodiments of the present application.
FIG. 8 is a schematic exploded view of the first bracket, the series busbars, and the output busbars provided by some embodiments of the present application.
FIG. 9 is a top view of the first bracket, the series busbars, and the output busbars provided by some embodiments of the present application.
FIG. 10 is a schematic structural view of a battery cells, connection busbars, and an installation bracket provided by some embodiments of the present application.
FIG. 11 is an exploded view of the battery cells, the connection busbars, and the installation bracket provided by some embodiments of the present application.
FIG. 12 is a schematic structural view of clamping elements near battery cells provided by some embodiments of the present application.

### Reference character indication:

0, battery set; 10, battery cell set; 01, battery cell; 1, output busbar; 11, second limiting hole; 2, series busbar; 21, third limiting hole; 3, connection busbar; 31, connection tab; 4, mounting bracket; 41, first bracket; 42, second bracket; 43, mounting hole; 44, connection hole; 45, limiting post; 46, line bundle slot; 47, avoidance passageway; 48, avoidance slot; 49, installation base; 5, installation bracket; 51, clamping element; 511, first hole; 512, second hole; 513, first limiting hole; 514, installation hole; 6, first line; 61, main part; 62, collection part; 7, second line; 8, temperature sensor; a, bus assembly; b, integrated busbar bracket; c, collection line bundle.

### DETAILED DESCRIPTION

### Embodiment 1

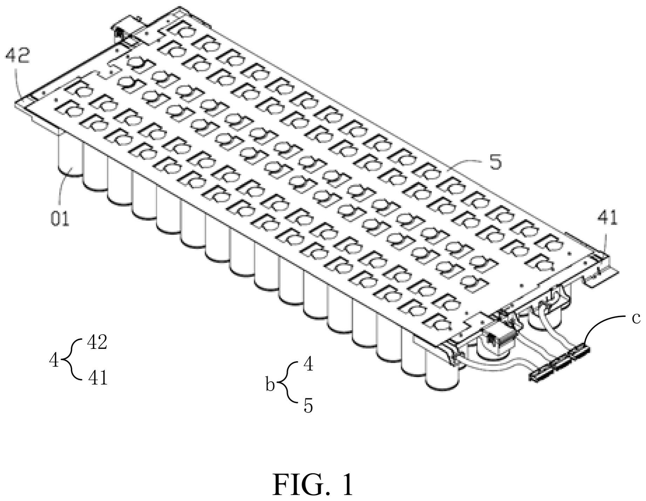

With reference to FIG. 1, FIG. 2, and FIG. 3, an integrated busbar provided by the embodiment of the present application comprises:
a bus assembly a configured to be electrically connected to a plurality of battery cells 01; and
an integrated busbar bracket b comprising a mounting bracket 4 and an installation bracket 5 configured as split structures;
wherein two ends of the bus assembly a are installed on the mounting bracket 4, and a middle part of the bus assembly a is installed on the installation bracket 5.

By configuring the integrated busbar bracket b into the mounting bracket 4 and the installation bracket 5 configured as split structures to regionally install and fasten different parts of the bus assembly a, the split structure design can provide a flexible adjustment space for installation of the bus assembly a, thereby reducing the limit of an integral design in the related art. At the same time, regarding the upgrade and modification of certain parts of the structure of the bus assembly a, and this can be achieved by replacing the corresponding mounting bracket 4 or installation bracket 5 to adapt to different bus assemblies a. For damage to different parts of the integrated busbar bracket b, the mounting bracket 4 or installation bracket 5 can also be replaced, thereby reducing replacement costs to further mitigate the technical issues in the related technology where the one-piece tray of the integrated busbar is inconvenient to disassemble and has relatively high replacement costs.

### Embodiment 2

With reference to FIG. 1, FIG. 2, and FIG. 3, an integrated busbar provided by the embodiment of the present application comprises a bus assembly a, an integrated busbar bracket b, and a collection line bundle c.

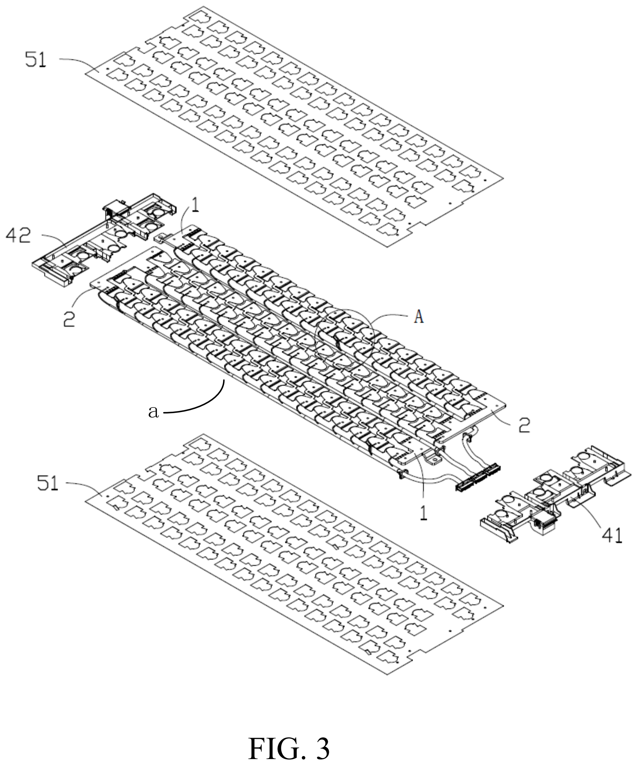

With reference to FIG. 3, FIG. 4, and FIG. 5, the bus assembly a is configured to be electrically connected to a plurality of battery sets 0, and each of the battery sets 0 comprises a plurality of battery cells 01. In the present embodiment, the battery cell 01 is a cylindrical power battery cell, and the battery set 0 is a cylindrical power battery set. The bus assembly a comprises two output busbars 1, a plurality of series busbars 2, and a plurality of connection busbars 3.

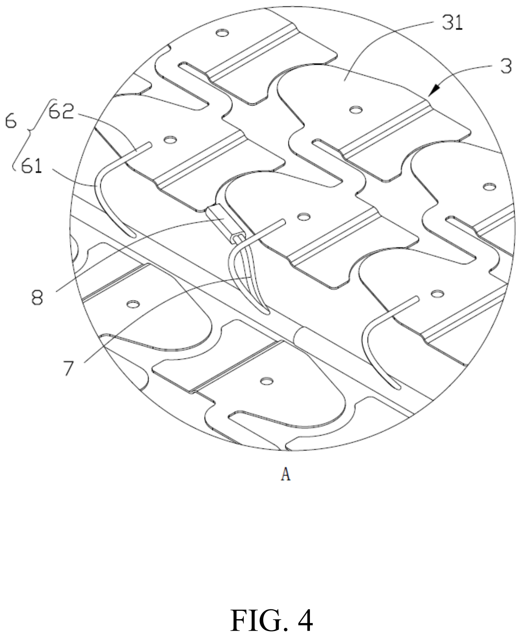

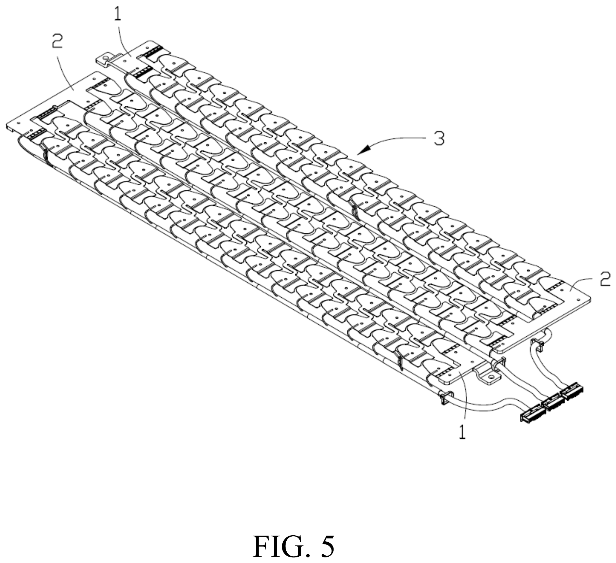

With reference to FIG. 4 and FIG. 5, the connection busbar 3 comprises two connection tabs 31 connected in series. The two connection tabs 31 are connected to different columns of the battery cells 01 of the same one of the battery sets 0, respectively. First ends of the two connection tabs 31 are configured to be connected to positive electrodes of the battery cells 01. Second ends of the two connection tabs 31 are configured to be connected to negative electrodes of adjacent ones of the battery cells 01. Any one of the connection tabs 31, through a first end and a second end of the connection tab 31, is connected to an adjacent one of the battery cells 01 in series such that the same column of the battery cells 01 are connected together in series. The two connection tabs 31 of the same connection busbar 3 connect the battery cells 01 of different columns of the same battery set 0 in parallel. The connection busbar 3 is connected to the plurality of the battery cells 01 of the battery set 0 in series or parallel.

With reference to FIG. 3 and FIG. 4, in the present embodiment, the battery set 0 is a cylindrical power battery set, the series busbar 2 is configured to be connected to adjacent two cylindrical power battery sets in series. The series busbars 2 in the present embodiment are two, the two series busbars 2 are configured to be connected to three cylindrical power battery sets in series. The series busbar 2 comprises a positive electrode module and a negative electrode module. The positive electrode module is configured to be connected to a positive electrode terminal of the battery cell 01 of an output terminal of the cylindrical power battery set. The negative electrode module is configured to be connected to a negative electrode terminal of the battery cell 01 of the output terminal of an adjacent one of the cylindrical power battery sets.

One of the two output busbars 1 is a positive electrode output busbar, the other of the two output busbars 1 is a negative electrode output busbar. The positive electrode output busbar is connected to a positive electrode terminal of the battery cell 01 of a positive electrode output terminal of the battery set 0. The negative electrode output busbar is connected to a negative electrode terminal of the battery cell 01 of a negative electrode output terminal of the battery set 0.

With reference to FIG. 1 to 3, the integrated busbar bracket b comprises the mounting bracket 4 and the installation bracket 5 configured as split structures.

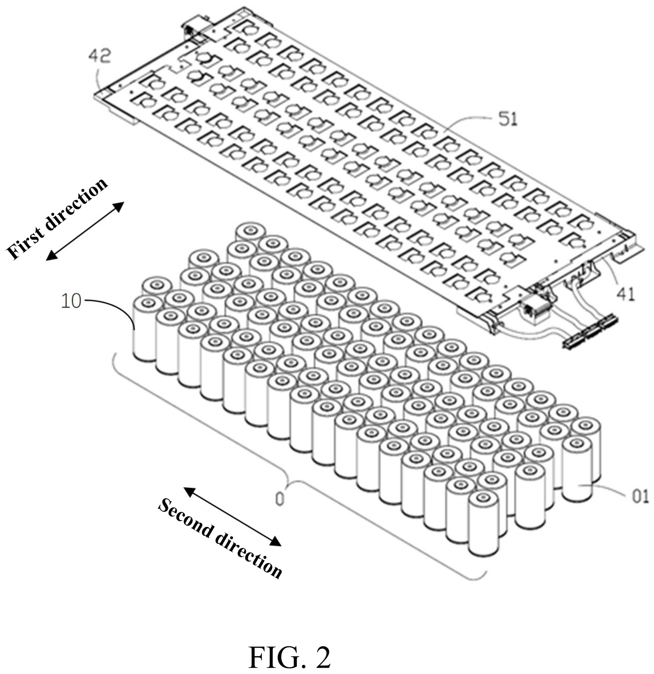

A first direction in FIG. 2 is utilized as an example, a second direction intersects the first direction in a level, the battery set 0 comprises a plurality of battery cell sets 10. The plurality of the battery cell sets 10 are arranged along the first direction. Each of the battery cell sets 10 comprises a plurality of battery cells 01. The plurality of the battery cells 01 are arranged along the second direction. The series busbars 2 are plural. The output busbars 1 are two. The two output busbars 1 are a positive electrode output busbar and a negative electrode output busbar. Adjacent two of the battery cell sets 10 are electrically connected to each other through the series busbar 2, thereby connecting the plurality of the battery cell sets 10 in series. The first direction is utilized as an example, regarding the two battery cell sets 10 on an outermost side along the first direction, one of the battery cell sets 10 is electrically connected to the positive electrode output busbar, and the other of the battery cell sets 10 is electrically connected to the negative electrode output busbar.

With further reference to FIG. 1, FIG. 2, and FIG. 3, the battery sets 0 in FIG. 1, FIG. 2, and FIG. 3 are utilized as an example, the battery set 0 comprises three battery cell sets 10. The three battery cell sets 10 are arranged along the first direction. The three battery cell sets 10 are a first battery cell set, a second battery cell set, and a third battery cell set. The series busbars 2 are two, and the output busbars 1 are two. The two output busbars 1 are a positive electrode output busbar and a negative electrode output busbar. An end of the second battery cell set is connected to an end of the first battery cell set in series through one series busbar 2. Another end of the second battery cell set is connected to another end of the third battery cell set through one series busbars 2. Another end of the first battery cell set is electrically connected to the positive electrode output busbar. Another end of the third battery cell set is electrically connected to the negative electrode output busbar.

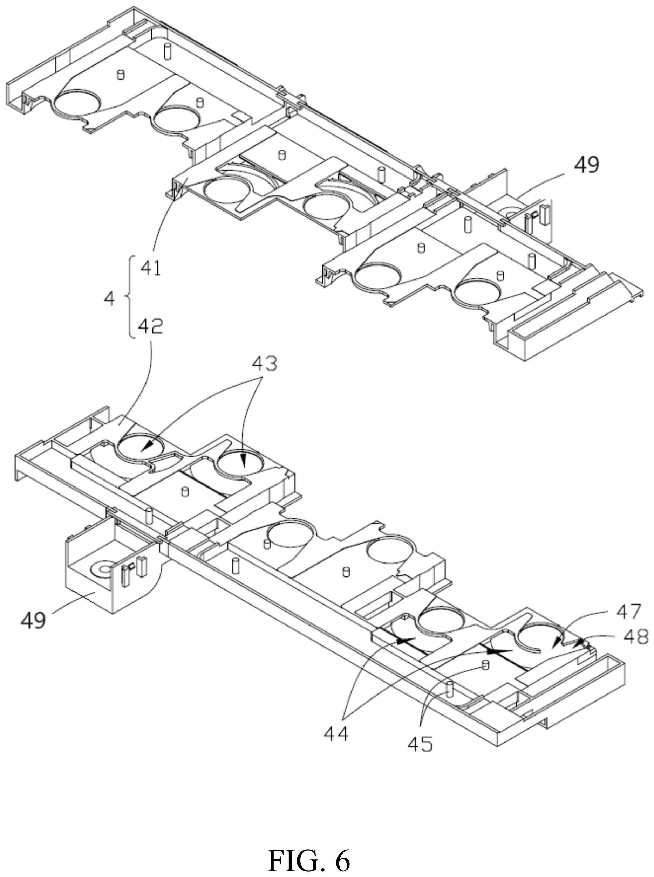

With reference to FIG. 6, the mounting bracket 4 comprises a first bracket 41 and a second bracket 42 disposed opposite to each other. The positive electrode output busbar and one of the series busbars 2 are installed on the first bracket 41. The negative electrode output busbar and the other of the series busbars 2 are installed on the second bracket 42. A plurality of mounting holes 43 and a plurality of connection holes 44 are formed in each of the first bracket 41 and the second bracket 42. The mounting bracket 4 is a plastic bracket to achieve the purpose of the lightweight integrated busbar bracket b.

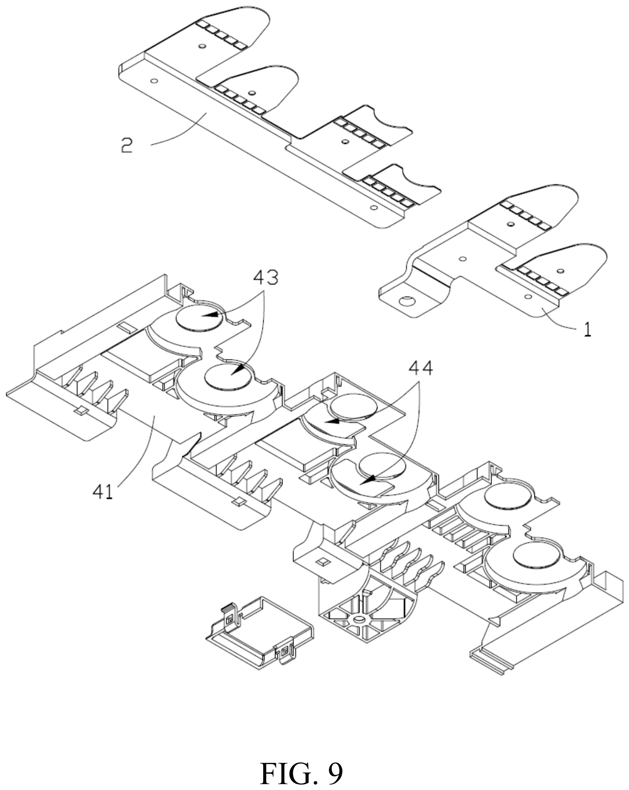

With reference to FIG. 6, FIG. 7, FIG. 8, and FIG. 9, the mounting holes 43 are sleeved around the positive electrodes of the battery cells 01 at two ends of the battery set 0. At least one of the mounting holes 43 exposes a connection location between a corresponding one of the output busbars 1 and the positive electrode of the battery cell 01. Also, at least one of the mounting holes 43 exposes a connection location between a corresponding one of the series busbars 2 and the positive electrode of the battery cell 01. At least one of the mounting holes 43 also exposes a connection location between a corresponding one of the connection tab 31 and the positive electrode of the battery cell 01.

At least one of the connection holes 44 exposes a connection location between a corresponding one of the output busbars 1 and a negative electrode of the battery cell 01. Also, at least one of the connection holes 44 exposes a connection location between a corresponding one of the series busbars 2 and the negative electrode of the battery cell 01. At least one of the connection holes 44 also exposes a connection location between a corresponding one of the connection tab 31 and the negative electrode of the battery cell 01.

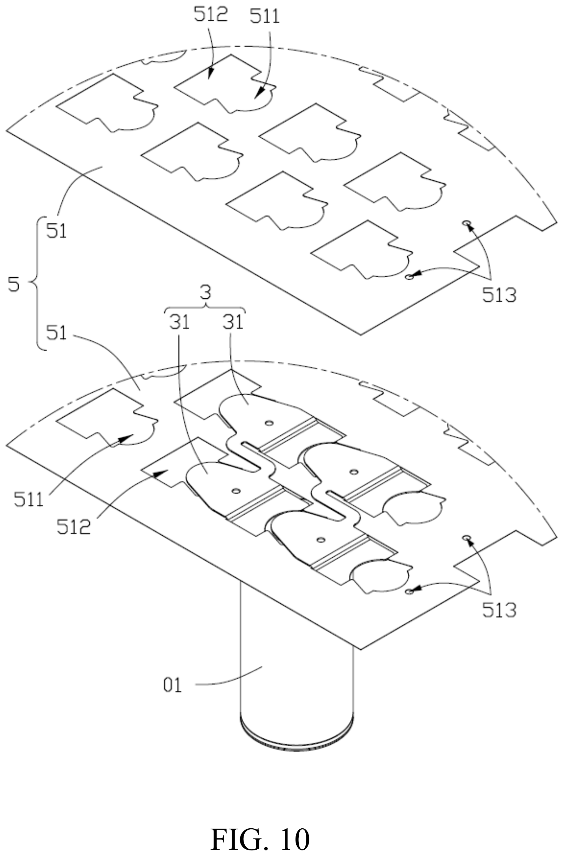

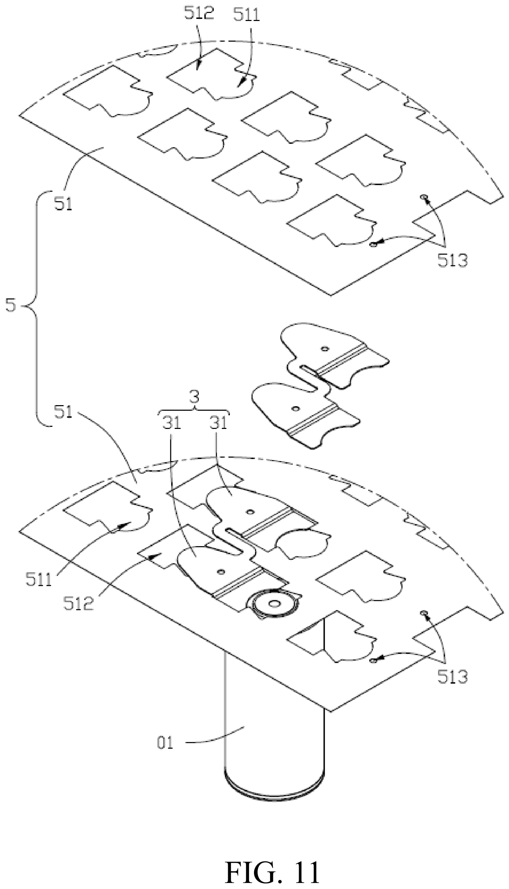

With reference to FIG. 10 and FIG. 11, the installation bracket 5 comprises two clamping elements 51 disposed opposite each other. The two clamping elements 51 clamps some of the plurality of the connection busbars 3, some of the plurality of the series busbars 2, and some of the two output busbars 1. A plurality of avoidance holes are formed in each of the two clamping elements 51. The avoidance hole comprises a first hole 511 and a second hole 512 communicating with each other.

With reference to FIG. 2 and FIG. 3, at least one of the first holes 511 exposes a connection location between a first end of the connection tab 31 and the positive electrode of the battery cell 01. At least one of the first holes 511 exposes a connection location between the positive electrode module of the series busbar 2 and the positive electrode of the battery cell 01. At least one of the first holes 511 exposes a connection location between a positive electrode output busbar 1 and the positive electrode of the battery cell 01. At least one of the second holes 512 exposes a connection location between a second end of the connection tab 31 and the negative electrode of the battery cell 01. At least one of the second holes 512 exposes a connection location between the negative electrode module of the series busbar 2 and the negative electrode of the battery cell 01. At least one of the second holes 512 exposes a connection location between a negative electrode output busbar 1 and the negative electrode of the battery cell 01.

The first hole 511 and the second hole 512 are formed on each of the two clamping elements 51 to facilitate laser soldering the battery cells 01 and the bus assembly. The two clamping elements 51 are hot press films. The two hot press films implement one-piece integration to the plurality of the connection busbars 3, the plurality of the series busbars 2 and the two output busbars 1 by a hot press process, thereby facilitating installation. The hot press films are able to reduce the mass of the integrated busbar, thereby achieving a lightweight design.

The integrated busbar bracket b is configured as the mounting bracket 4 and the installation bracket 5 configured as split structures to regionally install and fasten different parts of the bus assembly a, the split structure design of the integrated busbar bracket b can provide a flexible adjustment space for installation of the bus assembly a, thereby reducing the limit of an integral design in the related art. At the same time, regarding the upgrade and modification of certain parts of the structure of the bus assembly a, and this can be achieved by replacing the corresponding mounting bracket 4 or installation bracket 5 to adapt to different bus assemblies a. For damage to different parts of the integrated busbar bracket b, the mounting bracket 4 or installation bracket 5 can also be replaced, thereby reducing replacement costs.

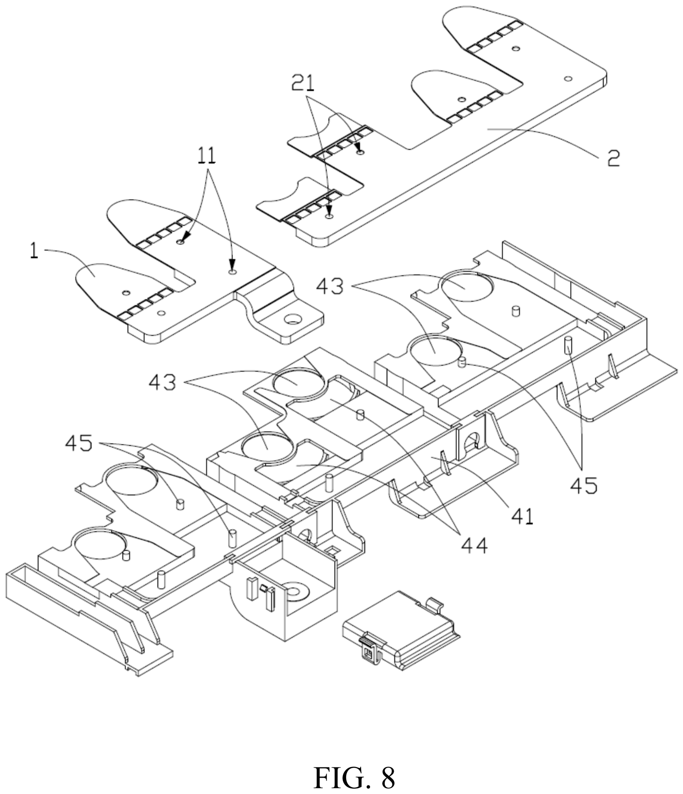

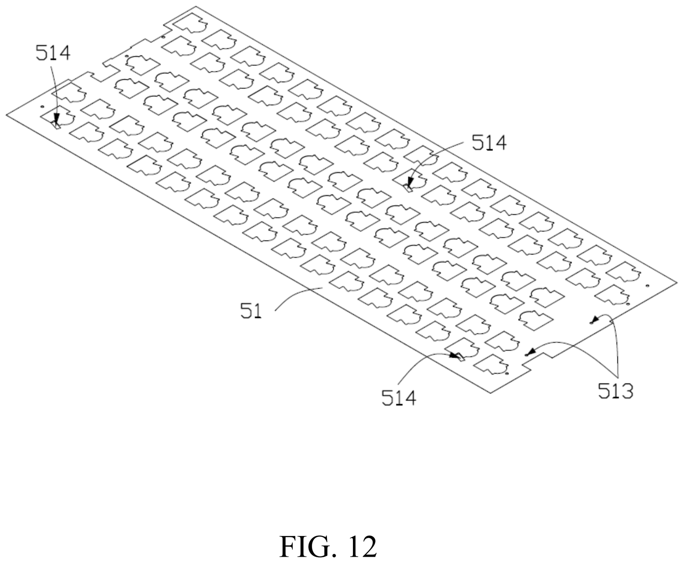

With reference to FIG. 8 and FIG. 12, a plurality of the first limiting holes 513 are formed in each of the two clamping elements 51. A plurality of second limiting holes 11 are formed in the output busbars 1. A plurality of third limiting holes 21 are formed in the series busbars 2. A plurality of limiting posts 45 are formed on the mounting bracket 4. At least one of the limiting posts 45 extends through the first limiting hole 513 and the second limiting hole 11. At least one of the limiting posts 45 extends through the second limiting hole 11. At least one of the limiting posts 45 extends through the first limiting hole 513 and the third limiting hole 21. At least one of the limiting posts 45 extends through the third limiting hole 21.

With reference to FIG. 4, the collection line bundle c comprises a first line 6, a plurality of second lines 7, and a plurality of temperature sensors 8.

The first line 6 comprises a main part 61 and a plurality of collection parts 62 connected to the main part 61. Each of the collection parts 62 is connected to a middle part of a corresponding one of the connection busbars 3. The collection part 62 is configured to collect a voltage of the battery cell 01. The two clamping elements 51 cover the collection parts 62 to achieve protection for soldering locations of the collection parts 62 and the battery cells 01. In the related technology, the one-piece tray cannot cover the soldering locations of the collection parts 62 and the battery cells 01, and an additional UV glue coating is required for protection. The present solution utilizing the hot press film process not only achieves bus installation but also achieves protection for the soldering locations of the collection parts 62 and the battery cells 01, thereby reducing the processes.

The plurality of the temperature sensors 8 are connected correspondingly to the plurality of the second lines 7 one by one. A plurality of installation holes 514 are formed in the clamping element 51 configured to be near the battery cell 01. The temperature sensor 8 is adhered to the other of the clamping elements 51 by a structural adhesive. The installation holes 514 expose corresponding ones of the temperature sensors 8. The temperature sensor 8 is configured to be located near the battery cell 01 and collect a temperature of the battery cell 01. In the present embodiment, the temperature sensor 8 is a negative temperature coefficient (NTC) thermistor. The present embodiment has three temperature sensors 8.

With reference to FIG. 6, both one of the temperature sensors 8 and a part of the clamping element 51 covering the temperature sensor 8 have interference with the second bracket 42. Therefore, an avoidance passageway 47 is disposed on the second bracket 42. The avoidance passageway 47 comprises a first avoidance passageway and a second avoidance passageway. The part of the clamping element 51 covering the temperature sensor 8 is disposed in the first avoidance passageway. The temperature sensor 8 is disposed in the second avoidance passageway.

An installation base 49 is disposed on each of the first bracket 41 and the second bracket 42. The two installation bases 49 are configured for installation of the positive electrode output busbar 1 corresponding to the first bracket 41 and the negative electrode output busbar 1 corresponding to the second bracket 42. In other embodiment, according to a number of the battery cells and current directions, the two installation bases 49 are disposed on the first bracket 41 or the second bracket 42.

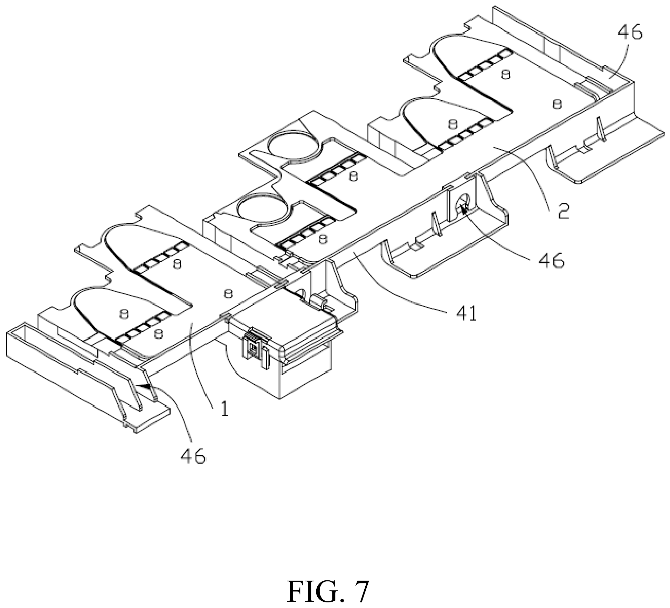

With reference to FIG. 7, a plurality of line bundle slots 46 are formed in the mounting bracket 4. The collection line bundle c is disposed in the line bundle slots 46 and is fastened by ties.

In the actual installation process, the bus assembly a and the soldered first line 6 are positioned by a working device first, then the two hot press films clamp the bus assembly a and the collection line bundle c from above and below, thereby achieving integration assembly of the two output busbars 1, the plurality of the series busbars 2 and the plurality of the connection busbars 3 and also achieving a coverage to a soldering location between the first line 6 and the battery cell 01. The first limiting holes 513 and the second limiting holes 11 are further sleeved around corresponding ones of the limiting posts 45, thereby completing the installation of the integrated busbar.

The embodiment of the present application also provides an integrated busbar bracket b adapted for an integrated busbar. The integrated busbar comprises a bus assembly a electrically connected to the plurality of the battery cells 01. The integrated busbar bracket b comprises a mounting bracket 4 and an installation bracket 5 configured as split structures. The mounting bracket 4 is configured for two ends of the bus assembly to be installed on the mounting bracket 4. The installation bracket 5 is configured for a middle part of the bus assembly to be installed on the installation bracket 5.

The embodiment of the present application also provides a battery module comprising an integrated busbar and a plurality of battery sets 0. The battery set 0 comprises the plurality of the battery cells 01. The battery cells 01 can be cylindrical power the battery cells 01.

## Claims

1. An integrated busbar, comprising:
a bus assembly (a) configured to be electrically connected to a plurality of battery cells (01); and
an integrated busbar bracket (b) comprising a mounting bracket (4) and an installation bracket (5) configured as split structures;
wherein two ends of the bus assembly (a) are installed on the mounting bracket (4), and a middle part of the bus assembly (a) is installed on the installation bracket (5).

2. The integrated busbar according to claim 1, wherein the installation bracket (5) comprises two clamping elements (51) disposed opposite to each other, and the two clamping elements (51) clamp the middle part of the bus assembly.

3. The integrated busbar according to claim 2, wherein the bus assembly (a) comprises two output busbars (1), a plurality of series busbars (2), and a plurality of connection busbars (3), the plurality of the connection busbars (3) are connected between the two output busbars (1) through the plurality of the series busbars (2), the two clamping elements (51) clamps some of the plurality of the connection busbars (3), some of the plurality of the series busbars (2), and some of the two output busbars (1), another some of the plurality of the series busbars (2) and another some of the two output busbars (1) are installed on the mounting bracket (4).

4. The integrated busbar according to claim 3, wherein a plurality of avoidance holes are formed in each of the two clamping elements (51), and each of the avoidance holes is configured to expose a connection location of the connection busbar (3) and the battery cell (01).

5. The integrated busbar according to claim 4, wherein the connection busbar (3) comprises a connection tab (31), a first end of the connection tab (31) is configured to a positive electrode of the battery cells (01), and a second end of the connection tab (31) is configured to be connected to a negative electrode of an adjacent one of the battery cells (01);
the avoidance hole comprises a first hole (511) and a second hole (512) communicating with each other, the first hole (511) exposes the first end of a corresponding one of the connection tabs (31), and the second hole (512) exposes the second end of an adjacent one of the connection tabs (31).

6. The integrated busbar according to claim 4, further comprising a collection line bundle (c), wherein the collection line bundle (c) is configured to be electrically connected to the battery cells (01) and the bus assembly, and the two clamping elements (51) clamp the collection line bundle (c).

7. The integrated busbar according to claim 6, wherein the collection line bundle (c) comprises a first line (6), the first line (6) comprises a main part (61) and a plurality of collection parts (62) connected to the main part (61), each of the collection parts (62) is connected to a corresponding one of the connection busbars (3), and the two clamping elements (51) cover the collection parts (62).

8. The integrated busbar according to claim 6, wherein the collection line bundle (c) further comprises a plurality of second lines (7) and a plurality of temperature sensors (8) connected to the plurality of the second lines (7), at least one of the temperature sensors (8) is configured to be located near a corresponding one of the battery cells (01), a plurality of installation holes (514) are formed in the clamping element (51) near the battery cell (01), and each of the installation holes (514) exposes a corresponding one of the temperature sensors (8).

9. The integrated busbar according to claim 6, wherein a plurality of line bundle slots (46) are formed in the mounting bracket (4), and a part of the collection line bundle (c) is disposed in the line bundle slot (46).

10. The integrated busbar according to claim 3, wherein one of the two output busbars (1) is a positive electrode output busbar, the other of the two output busbars (1) is a negative electrode output busbar, the positive electrode output busbar is electrically connected to positive electrode terminals of the plurality of the battery cells, and the negative electrode output busbar is electrically connected to negative electrode terminals of the plurality of the battery cells.

11. The integrated busbar according to claim 10, wherein the integrated busbar is applied to a battery set (0), the battery set (0) comprises a plurality of battery cell sets (10), the plurality of the battery cell sets (10) are disposed at intervals, each of the battery cell sets (10) comprises the plurality of the battery cells (01), the plurality of the battery cell sets (10) are electrically connected to through the plurality of the series busbars (2), one of two of the battery cell sets (10) located on an outermost end, is connected to the positive electrode output busbar, and the other of the two of the battery cell sets (10) is electrically connected to the negative electrode output busbar.

12. The integrated busbar according to claim 11, wherein the mounting bracket (4) comprises a first bracket (41) and a second bracket (42) disposed opposite to each other;
the series busbars (2) are two, one of the series busbars (2) and the positive electrode output busbar are installed on the first bracket (41), and the other of the series busbars (2) and the negative electrode output busbar are installed on the second bracket (42).

13. The integrated busbar according to claim 12, wherein a plurality of mounting holes (43) and a plurality of installation holes (44) are formed in each of the first bracket (41) and the second bracket (42), each of the mounting holes (43) corresponds to one of the installation holes (44), and the installation holes (44) are formed in a side of the mounting holes (43).

14. The integrated busbar according to claim 13, wherein at least one of the mounting holes (43) is configured to expose a connection location between the output busbars (1) and a positive electrode of a corresponding one of the battery cells (01); and/or
at least one of the mounting holes (43) is configured to expose a connection location between the series busbars (2) and a positive electrode of a corresponding one of the battery cells (01); and/or
at least one of the mounting holes (43) is configured to expose a connection location between the connection tab (31) and a positive electrode of a corresponding one of the battery cells (01).

15. The integrated busbar according to claim 13, wherein at least one of the connection holes (44) is configured to expose a connection location between the output busbars (1) and a negative electrode of a corresponding one of the battery cells (01); and/or
at least one of the connection holes (44) is configured to expose a connection location between the series busbars (2) and a negative electrode of a corresponding one of the battery cells (01); and/or
at least one of the connection holes (44) is configured to expose a connection location between the connection tab (31) and a negative electrode of a corresponding one of the battery cells (01).

16. The integrated busbar according to claim 3, wherein at least one first limiting hole (513) is formed in each of the clamping elements (51), at least one second limiting hole (11) is a formed in each of the output busbars (1), and at least one of the third limiting hole (21) is formed in each of the series busbars (2);
at least one limiting post (45) is disposed on the mounting bracket (4), the limiting post (45) extends through at least one of the first limiting hole (513), the second limiting hole (11), and the third limiting hole (21) to fix the clamping elements (51), the output busbars (1), and the series busbars (2) on the mounting bracket.

17. The integrated busbar according to any one of claims 2 to 16, wherein the mounting bracket (4) comprises a plastic bracket, and the clamping elements (51) are hot press films.

18. The integrated busbar according to any one of claims 1 to 16, wherein an installation base (49), configured to install an output busbar (1) electrically connected to the bus assembly, is disposed at an end or two ends of the mounting bracket (4).

19. An integrated busbar bracket, adapted for an integrated busbar, wherein the integrated busbar comprises a bus assembly configured to be electrically connected to a plurality of battery cells (01), and the integrated busbar bracket (b) comprises a mounting bracket (4) and an installation bracket (5) configured as split structures;
wherein the mounting bracket (4) is configured for two ends of the bus assembly (a) to be installed on the mounting bracket (4), and the installation bracket (5) is configured for a middle part of the bus assembly (a) to be installed on the installation bracket (5).

20. A battery module, comprising the integrated busbar according to any one of claims 1 to 18 and a plurality of battery sets (0), and the integrated busbar is disposed on the plurality of the battery sets (0).

21. The battery module according to claim 20, wherein each of the battery sets (0) comprises a plurality of battery cells (01), and the plurality of the battery cells (01) are cylindrical power battery cells.
